# EUROPEAN PATENT SPECIFICATION

(11) **EP 2 522 249 B1**
(45) Date of publication and mention of the grant of the patent: **02.07.2014**
(21) Application number: 11003929.4
(22) Date of filing: 12.05.2011
(51) Int. Cl.: A45F 3/08, A45F 3/04, B62K 3/00

(54) **Scooter carrying case and backpack apparatus**
Rollertransportbehälter und Rucksackvorrichtung
Boîte de transport de scooter et appareil de sac à dos

(43) Date of publication of application: 14.11.2012
(73) Proprietor: Power Scheme Industries Limited, Kowloon (HK)
(72) Inventor: Wegener, Andreas C., Encinitas, CA 92024 (US)
(74) Representative: Flach, Dieter Rolf Paul

(56) References cited:
- EP-A2- 1 745 719
- WO-A1-2005/027678
- US-A1- 2005 045 673
- US-A1- 2010 308 086

## Description

### FIELD

The present disclosure relates to cases and backpacks for carrying scooters.

### BACKGROUND

Freestyle scootering is an increasingly popular action sport. There are several freestyle scooter competitions and exhibitions held annually in which participants engage in stylized riding and a variety of tricks. In addition, riders use scooters for exercise and recreation in parks, city streets, sidewalks, driveways, and parking lots. Scooters are also becoming more popular as a mode of urban transportation.

As more people participate in leisure scooter activity and organized events and use scooters for transportation purposes, a need has arisen for a convenient way to carry and transport scooters. In particular, many public facilities such as schools, retail stores and other public buildings are reluctant to allow people to enter if they are openly carrying a scooter. Securely stowing the scooter in a bag would alleviate this problem in most cases. However, there are very few existing bags or carrying cases designed to hold scooters, and most freestyle scooters are quite bulky and often are not easily collapsible. Thus, there is a need for a convenient bag designed to carry a freestyle scooter.

Some backpacks for carrying and transporting skateboards or inline skates are currently available. They typically include a holder for the sporting good that consists of a simple flap attached to the backpack body. The holder sometimes includes buckles to attach the flap to the body of the backpack. However, these backpacks have some significant disadvantages. Because there is no solid connection or closure on the sides of the holder, the skateboard or other sporting good is not held securely and may shift and move around when the user is waling. Another disadvantage is that the flap looks unattractive when not being used to carry the sporting good.

EP 1 745 719 discloses a backpack which includes a backpack body comprising first and second panels cooperating to substantially form a first compartment therebetween. The backpack body further comprises an expandable compartment configured for housing an object, the expandable compartment including first and second areas cooperating with each other. Thereby the first area is connected to the backpack body and exhibits two end portions, each end portion comprising a protrusion, and the first area has a fold line approximately along its center, the second area comprises three regions configures to cooperate with each other. The backpack body further comprises a cord capable of cooperating with the second area for facilitating the cooperation of the three regions. The shape of the protrusions of the end portions prevent the visibility of the first area to a user when the compartment is in an unexpanded configuration. When the compartment is in the unexpanded configuration, approximately half of the first area abuts the second area and approximately half of the material of the first area buts the first panel.

WO 2005/027678 A discloses a carrier for leisure comprising a back plate having a shoulder strap, a cover couple to the back plate in a foldable fashion, a boot receiver positioned between the back plate and the cover for carrying boots, receiver provided in at least one of the back plate and the cover for carrying a leisure product such a goggles, gloves or the like, upper and lower mounting portions installed respectively at upper and lower portions of the outside of the cover, mounting means installed in the upper and lower mounting portions for mounting a ski or a snowboard, the length of the mounting means being adjustable, and a supporter for connecting the shoulder strap to both upper side portions for the cover such that the load exerted to the cover can be distributed, the length of the supporter being adjustable.

Accordingly, there is a need for a carrying case or backpack that is specifically designed to hold a freestyle scooter. More particularly, there is a need for a backpack with a holder that can securely house and transport a freestyle scooter and also looks attractive when not in use.

### SUMMARY

The above mentioned need is met by providing a backpack apparatus according to claim 1. The present disclosure, in its many embodiments, alleviates to a great extent the disadvantages of known sporting good carrying bags by providing a backpack that includes a holder panel assembly with side walls that forms a scooter storage compartment and is convertible between an open position and a partially closed position. In addition, a closure device secures the stem of the scooter handlebar assembly, and a side pocket may also be provided to house the stem.

The backpack apparatus comprises a backpack body and a holder panel assembly. The backpack body has a top portion, a bottom portion, a front portion, a back portion, a first side portion, and a second side portion and defining a main storage compartment. The holder panel assembly includes a holder panel which has a top edge, a bottom edge, a first side edge, and a second side edge. The holder panel assembly also includes at least one zipper assembly, a first side wall extending from a portion of the first side edge of the holder panel, and a second side wall extending from a portion of the second side edge holder panel. The bottom edge of the holder panel is fixedly attached to the backpack body. The top edge of the holder panel is unattached to the backpack body. The first side wall of the holder panel assembly is fixedly attached to the backpack body, and the second side wall of the holder panel assembly is fixedly attached to the backpack body. The backpack also comprises a closure device attached to the first side portion of the backpack body. An exemplary embodiment of a closure device comprises a band and a fastener.

The holder panel assembly defines a scooter storage compartment. The scooter storage compartment defines a first side opening defined by the first side edge of the holder panel, the first side wall of the holder panel assembly, and the first side portion of the backpack body. The scooter storage compartment may further define a second side opening defined by the second side edge of the holder panel, the second side wall of the holder panel assembly, and the second side portion of the backpack body.

The at least one zipper assembly comprises a first zipper assembly running along the first side edge of the holder panel and a second zipper assembly running along the second side edge of the holder panel. In exemplary embodiments, the backpack apparatus further comprises at least one strap apparatus fixedly attached to the holder panel assembly and releasably attachable to the backpack body. The backpack apparatus may also comprise a side pocket on the first side portion of the backpack body located below the closure device.

The backpack apparatus for carrying a scooter, comprises a backpack body defining a main storage compartment, a holder panel assembly and a closure device. The backpack body has a top portion, a bottom portion, a front portion, a back portion, a first side portion, a second side portion, and a side pocket on the first side portion. The holder panel assembly includes a holder panel which has a top edge, a bottom edge, a first side edge, and a second side edge and includes a first side wall extending from a portion of the first side edge of the holder panel, and a second side wall extending from a portion of the second side edge of the holder panel.

The first side wall of the holder panel assembly is fixedly attached to the backpack body, and the second side wall of the holder panel assembly is fixedly attached to the backpack body. The bottom edge of the holder panel is fixedly attached to the backpack body, and the top edge of the holder panel is unattached to the backpack body. The holder panel assembly further includes a first zipper assembly running along the first side edge of the holder panel and a second zipper assembly running along the second side edge of the holder panel. A closure device is attached to the first side portion of the backpack body. The closure device may comprise a band and a fastener. In exemplary embodiments, the band is made of an elastic material and the fastener is made of velcro. The backpack apparatus may further comprise at least one strap apparatus fixedly attached to the holder panel assembly and releasably attachable to the backpack body.

The holder panel assembly defines a scooter storage compartment convertible between an open configuration and a partially closed configuration. In the open configuration the first and second zipper assemblies are each in an unzipped position such that the scooter storage compartment defines a first side opening defined by the first side edge of the holder panel, the first side wall of the holder panel assembly, and the first side portion of the backpack body and a second side opening defined by the second side edge of the holder panel, the second side wall of the holder panel assembly, and the second side portion of the backpack body. In the partially closed configuration the first zipper assembly is in an unzipped position such that the scooter storage compartment defines a first side opening defined by the first side edge of the holder panel, the first side wall of the holder panel assembly, and the first side portion of the backpack body, and the second zipper assembly is in a zipped position.

The carrying case a scooter comprises a main body, a scooter storage compartment, and a closure device. The main body has a top portion, a bottom portion, a front portion, a back portion, a first side portion, and a second side portion and defines a main storage compartment. The scooter storage compartment is defined by a panel, a first side wall, and a second side wall. The scooter storage compartment is attached to the main body by the first and second side walls and is convertible between an open configuration and a partially closed configuration. The closure device is attached to the first side portion of the main body and may comprise a band and a fastener. The carrying case may further comprise a side pocket on the first side portion of the main body located below the closure device. At least one strap apparatus may be fixedly attached to the panel and releasably attachable to the main body.

The panel comprises at least one zipper assembly that may include a first zipper assembly on a first side edge of the panel and a second zipper assembly on a second side edge of the panel. When the scooter storage compartment is in the open configuration the first and second zipper assemblies are each in an unzipped position such that the scooter storage compartment defines a first side opening defined by the first side edge of the panel, the first side wall of the panel, and the first side portion of the main body and a second side opening defined by the second side edge of the panel, the second side wall of the panel, and the second side portion of the main body. When the scooter storage compartment is in the partially closed configuration the first zipper assembly is in an unzipped position such that the scooter storage compartment defines a first side opening defined by the first side edge of the panel, the first side wall of the panel, and the first side portion of the main body, and the second zipper assembly is in a zipped position.

Accordingly, it is seen that backpack apparatus and carrying cases are provided which provide convenient and secure storage compartments for carrying and transporting freestyle scooters. These and other features and advantages will be appreciated from review of the following detailed description, along with the accompanying figures in which like reference numbers refer to like parts throughout.

### BRIEF DESCRIPTION OF THE DRAWINGS

The foregoing and other objects of the disclosure will be apparent upon consideration of the following detailed description, taken in conjunction with the accompanying drawings, in which:
FIG. 1 is a perspective view of an embodiment of a backpack apparatus in accordance with the present disclosure;
FIG. 2 is a rear view of an embodiment of a backpack apparatus in accordance with the present disclosure;
FIG. 3 is a side view of an embodiment of a backpack apparatus in accordance with the present disclosure;
FIG. 4 is a side view of an embodiment of a backpack apparatus in accordance with the present disclosure;
FIG. 5 is a side view of an embodiment of a backpack apparatus in accordance with the present disclosure;
FIG. 6 is a side view of an embodiment of a backpack apparatus in accordance with the present disclosure;
FIG. 7 is a perspective view of an embodiment of a scooter in accordance with the present disclosure; and
FIG. 8 is a perspective view of an embodiment of a backpack apparatus and scooter in accordance with the present disclosure;
FIG. 9 is a side view of an embodiment of a backpack apparatus and scooter in accordance with the present disclosure;
FIG. 10 is a perspective view of an embodiment of a backpack apparatus and scooter in accordance with the present disclosure;
FIG. 11 is a side view of an embodiment of a backpack apparatus and scooter in accordance with the present disclosure;
FIG. 12 is a perspective view of an embodiment of a backpack apparatus and a scooter in accordance with the present disclosure;
FIG. 13 is a perspective view of an embodiment of a backpack apparatus and scooter steer tube and handlebar assembly in accordance with the present disclosure; and
FIG. 14 is a rear view of an embodiment of a backpack apparatus and scooter in accordance with the present disclosure.

### DETAILED DESCRIPTION

In the following paragraphs, embodiments will be described in detail by way of example with reference to the accompanying drawings, which are not drawn to scale, and the illustrated components are not necessarily drawn proportionately to one another. Throughout this description, the embodiments and examples shown should be considered as exemplars, rather than as limitations of the present disclosure. As used herein, the "present disclosure" refers to any one of the embodiments described herein, and any equivalents. Furthermore, reference to various aspects of the disclosure throughout this document does not mean that all claimed embodiments or methods must include the referenced aspects.

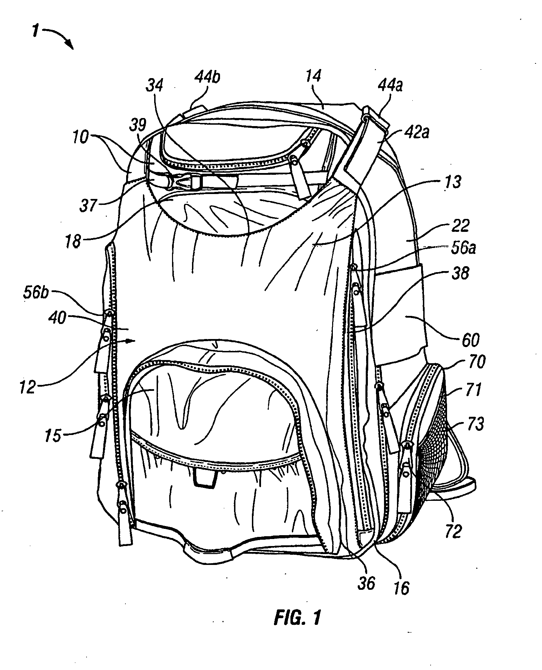

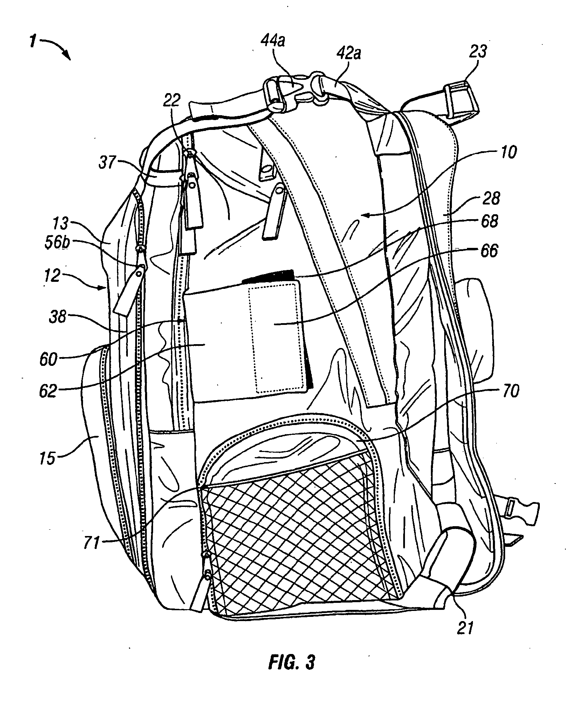

FIGS. 1-6 show an exemplary embodiment of a carrying case 1 for a scooter. The carrying case 1 may be in any basic form, such as that of a large handbag, duffel bag, suitcase, or other luggage. In exemplary embodiments, the carrying case is a backpack apparatus 1 comprised of a backpack body 10 and a holder panel assembly 12. The backpack body 10 has a top portion 14, a bottom portion 16, a front portion 18, a back portion 20, a first side portion 22, and a second side portion 24 that together define a main storage compartment 26. As best seen in FIG. 3, a secondary storage compartment 27 could also be provided. Shoulder straps 28a, 28b may be provided that extend vertically adjacent the back portion 20 of the backpack body 10 so the user can comfortably don the backpack apparatus 1 over his or her shoulders and carry it on his or her back. The shoulder straps 28a, 28b may be removably fastened to the backpack body 10 at or near the top and bottom portions 14, 16 or may be integrally formed with the backpack body 10. Exemplary embodiments further include a front securing strap 37 and buckle 39 to provide an additional securing mechanism for holding a scooter, as discussed in more detail herein.

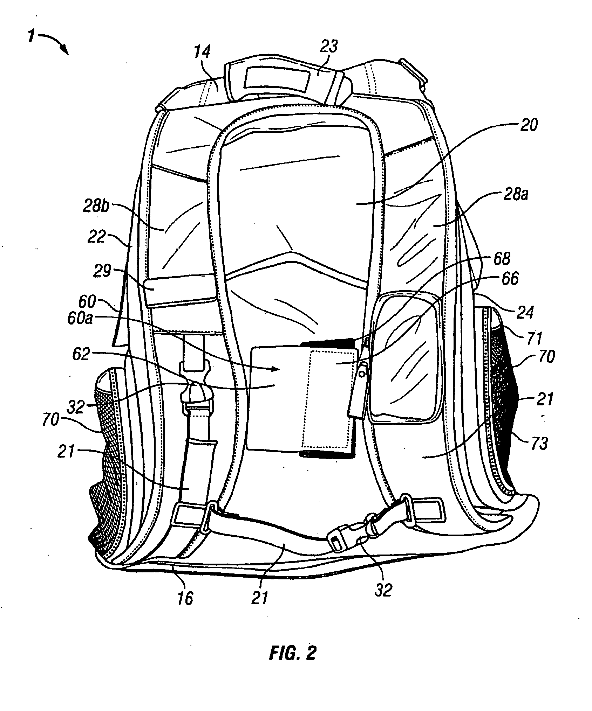

As best seen in FIG. 2, a webbing strap 21 may be provided to make carrying the backpack apparatus 1 more comfortable, may extend along or between the shoulder straps 28a, 28b, and may include a detachable buckle 32 or other mechanism to adjust the length of the strap 21. As discussed in more detail herein, a releasable strap 29 may be provided on one or more of shoulder straps 28a, 28b to secure a scooter handlebar 136 to the shoulder strap 28 so the handlebar 136 does not swing around when carried. In exemplary embodiments, the releasable strap 29 employs a fastener of velcro material. A handle 23 may be fixedly attached to the backpack body 10 for ease of carrying.

Holder panel assembly 12 includes a fabric holder panel 13 which may be approximately the same size, or a little bit smaller than, the front portion 18 of the backpack body 10. The holder panel 13 has a top edge 34, a bottom edge 36, a first side edge 38, and a second side edge 40. In exemplary embodiments, the bottom edge 36 of the holder panel 13 is attached to the backpack body 10 at or near the part of the backpack apparatus where the bottom portion 16 and front portion 18 of the backpack body 10 meet. The top edge 34 of the holder panel 13 may be straight or have a crescent shape. Thus, holder panel 13 may be substantially square or rectangle shaped but with a curved top edge 34. The holder panel 13 may also include a rear pocket 15 for extra storage space.

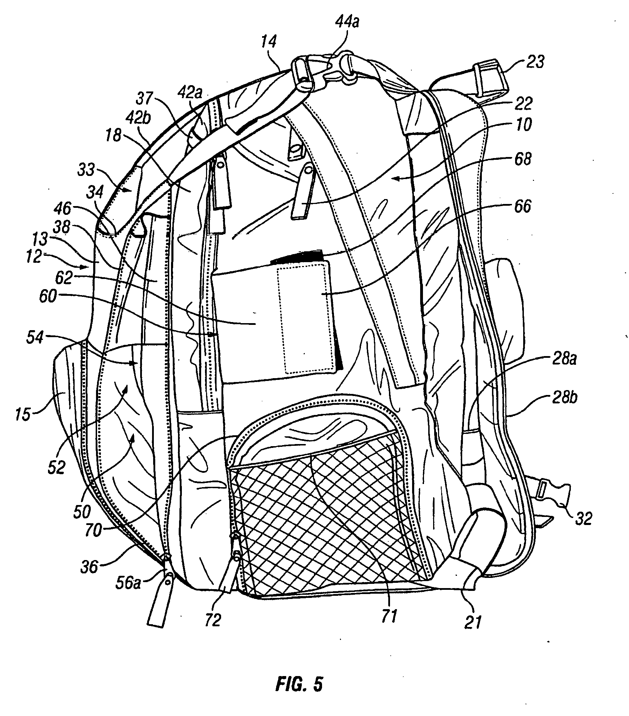

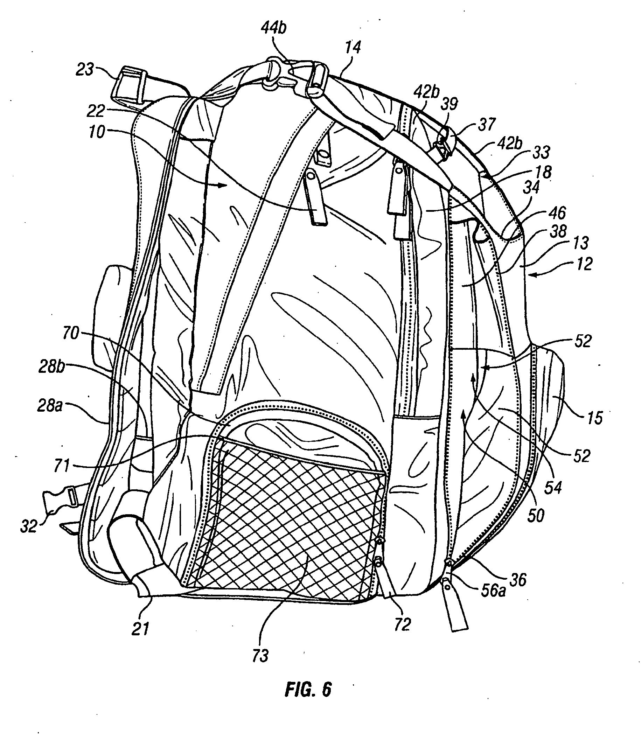

As best seen in FIGS. 5 and 6, in exemplary embodiments the top edge 34 of the holder panel 13 is not directly attached to the backpack body 10. Rather, one or more strap apparatus 42 may be provided, which could include a buckle 44. The strap apparatus 42a, 42b serve to releasably attach the holder panel 13 to the backpack body 10 and may be adjustable in length. As described in more detail herein, the strap apparatus 42 may also help to secure a scooter steer tube 122 when the backpack apparatus 1 is being used to carry a scooter. The arrangement of the top edge 34 of the holder panel 13 being unattached to the backpack body 10 with the releasable attachment capability of the strap apparatus 42 and buckle 44 is advantageous in that the top edge 34 of the holder panel 13 can be spaced from the backpack body 10 so there is space in the holder panel assembly 12 to house the scooter.

The holder panel assembly 12 further comprises one or more side walls 46, 48 attached to the first and second side edges 38, 40 of the holder panel 13. More particularly, first side wall 46 extends from a portion of the first side edge 38 of the holder panel 13, and second side wall 48 extends from the second side edge 40 of the holder panel 13. Side walls 46, 48 may be fixedly attached to or integrally formed with the side edges 38, 40 of fabric holder panel 13. The side walls 46, 48 are either fixedly attached to or integrally formed with the backpack body 10 as well. First side wall 46 connects with backpack body 10 at or near a point where the first side portion 22 meets the front portion 18 of the backpack body 10, second side wall 48 connects with backpack body 10 at or near a point where the second side portion 24 meets the front portion 18 of the backpack body.

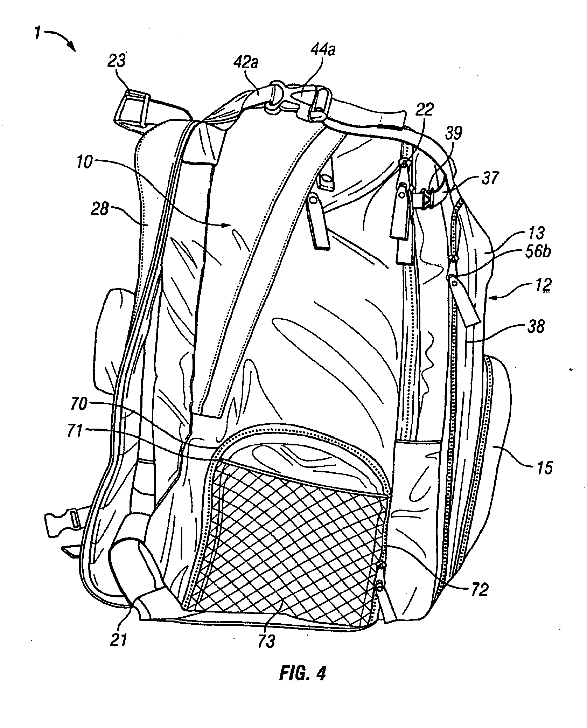

This arrangement of side walls 46, 48 advantageously provides additional connections between the holder panel 13 and the backpack body 10 while also helping to define a scooter storage compartment 50 having side openings 52, 54 to provide space for parts of a scooter 100 to extend from the backpack apparatus 1. More particularly, as best seen in FIG. 4, a first side opening 52 is defined by first side wall 46 forming the top of the side opening 52, the first side edge 38 of the holder panel 13, and the first side portion 22 of the backpack body 10. Similarly, a second side opening 54 is defined by second side wall 48 forming the top of the side opening 54, the second side edge 40 of the holder panel 13, and the second side portion 22 of the backpack body 10. As discussed in more detail herein, the additional connections to the backpack body 10 provided by side walls 46, 48 serve to stabilize a scooter 100 when the scooter is being carried in the scooter storage compartment 50 of the backpack apparatus 1.

The holder panel assembly 12 includes one or more slidable fasteners such as a zipper assembly 56, which serve to open and close the scooter storage compartment 50. More particularly, a first zipper assembly 56a and a second zipper assembly 56b on opposite sides of the holder panel 13. The first zipper assembly 56a runs along the first side edge 38 of the holder panel 13 and can connect the holder panel 13 to the backpack body 10 at or near an area where the first side portion 22 meets the front portion 18 of the backpack body 10. The second zipper assembly 56b runs along the second side edge 40 of the holder panel 13 and can connect the holder panel 13 to the backpack body 10 at or near an area where the second side portion 24 meets the front portion 18 of the backpack body 10. As discussed in more detail herein, the zipper assemblies 56a, 56b slidably fasten and unfasten the holder panel 13 to the backpack body 10 and enable the user to convert the scooter storage compartment 50 between an open configuration and a partially closed configuration depending on whether the zippers or in a zipped or unzipped position. The zipper assemblies 56a, 56b may close from the top down or the bottom up, depending on the storage configurations desired.

A closure device 60 is provided to hold and secure a steer tube 122 of a scooter 100. The closure device 60 could be any type of component that can be fixedly attached to a side portion 22, 24 of the backpack body 10 and has sufficient strength to hold the scooter steer tube 122. An exemplary embodiment of a closure device 60 is a band 62 having a holding portion 64 and a mating portion 66. A mating piece 68 is fixedly attached to the first side portion 22 of the backpack body 10 and mates with the mating portion 66 of the closure device 60. At least the holding portion 64 of the band 62 may be made of an elastic material to make loading the scooter steer tube 122 easier. It should be noted that one or more closure devices could be provided on the first and/or second sides 22, 24 of the backpack body 10. The mating portion 66 and mating piece 68 maybe composed of any material or mechanism that provides a releasable connection and in exemplary embodiments may be made of velcro, with male velcro on the mating portion 66 and female velcro on the mating piece 68. As discussed in more detail herein, the closure device 60 may be opened and closed by releasing and connecting mating portion 66 with mating piece 68.

As shown in FIG. 2, a second closure device 60A may be provided on the back portion 20 of the backpack body 10. As described in more detail herein, the closure device 60A can be used to secure the backpack apparatus 1 to a scooter when the user is riding the scooter. Closure device 60A can be any type of component that can be fixedly attached to the back portion 20 of the backpack body 10 and has sufficient strength to keep the backpack apparatus 1 securely fastened to a scooter steer tube 122.

One or more side pockets 70 may be provided on the backpack apparatus 1. As described in more detail herein, the side pockets 70 may be used to help carry and support the bottom of a scooter steer tube 122. In addition, the side pockets 70 can provide additional storage for small items such as keys, wallets, purses, and small tools. Any number of side pockets may be located on one or more of the first and/or second sides 22, 24 of the backpack body 10. In exemplary embodiments, a side pocket 70 is located on the first side portion 22 of the backpack body 10 below the closure device 60. This position advantageously allows a scooter steer tube 122 to be simultaneously held by the closure device 60 at an intermediate point of the steer tube 122 while the bottom of the steer tube 122 is disposed within and supported by the side pocket 70. In exemplary embodiments, side pocket 70 is a pocket made of a mesh material 73 with an elastic band 71 at its top edge. As described in more detail herein, the elastic band 71 allows easy insertion of a scooter steer tube 122 while helping to keep the steer tube 122 held firmly in place. The side pocket 70 may also be made of a solid piece of material and have a fastener such a zipper assembly 72 to open and close it.

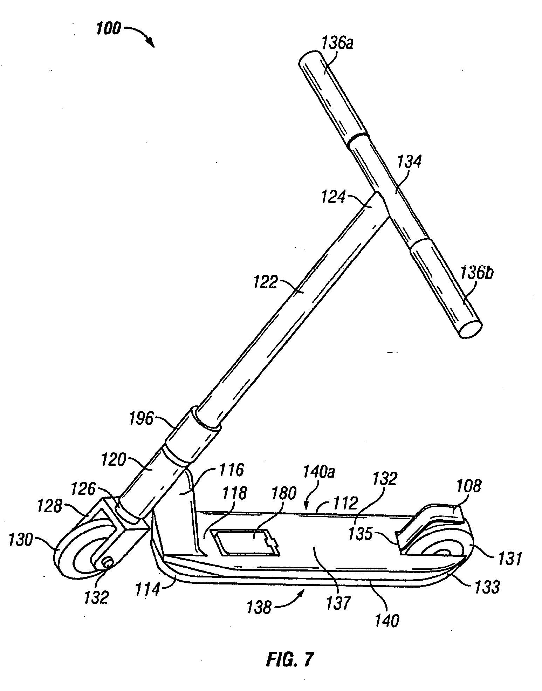

With reference to FIG. 7, an exemplary embodiment of a scooter that can be carried using disclosed embodiments of a backpack apparatus will now be described. Scooter assembly 100 includes a deck assembly 110 comprised of deck 112 and, optionally, a grind plate 114 attachable to the deck 112. Deck 12 is an elongate member that has a front end 118, a rear end 135, a top surface 137, a bottom surface 138, and two opposite side surfaces 140a, 140b. Exemplary embodiments of a deck 12 may include a storage compartment 180 that the rider can use to store keys, money, etc. In particular, storage compartment 80 is useful for storing specialized tools such as an Allen wrench that are needed to manipulate various fasteners to assemble or adjust components of the scooter assembly.

Neck 116 is joined to deck 112 at or near a front end 118 of the deck 112. A head tube 120 is fixedly attached to the neck 116, which serves to operatively connect the deck 112 to the front wheel and the handlebar assemblies. The neck 116 may be integrally formed with the deck 112 such that the deck 112 and neck 116 are a single machined component. Alternatively, the neck 116 and head tube 120 may be integrally formed as a single component. The neck 116 and head tube 120 may be made of various metals, plastic, carbon fiber, or other materials that impart sufficient structural strength but are not so heavy that they compromise maneuverability of the scooter.

Steer tube 122 has a top portion 124 and a bottom portion 126 and extends through the head tube 120. Front fork 128 is movably coupled to the bottom portion 126 of the steer tube 122 and has a front wheel 130 coupled thereto via front wheel axle 132. At the top portion 124 of the front fork 128 a handlebar assembly 134 is attached, providing handles 136a, 136b for the rider to grip and steer the scooter. Turning the handlebar assembly 134 causes steer tube 122 to turn the front fork 128 and front wheel 130. A brake 108 may be fixedly attached to or integrally formed with a rear end 135 of deck 112, which also has a rear wheel 131 coupled thereto via a rear wheel axle 133. The rear wheel 131 may be turnable or a fixed position wheel.

In operation, the user has at least two options for carrying a scooter 100 with backpack apparatus 1. Disclosed embodiments of the backpack apparatus 1 facilitate secure carriage of a fully assembled scooter and, if desired, secure carriage of a partially disassembled scooter in which the steer tube has been separated from the deck assembly of the scooter. As mentioned above, the scooter storage compartment 50 is convertible between an open configuration suitable for carrying a fully assembled scooter and a partially closed configuration for carrying a partially disassembled scooter.

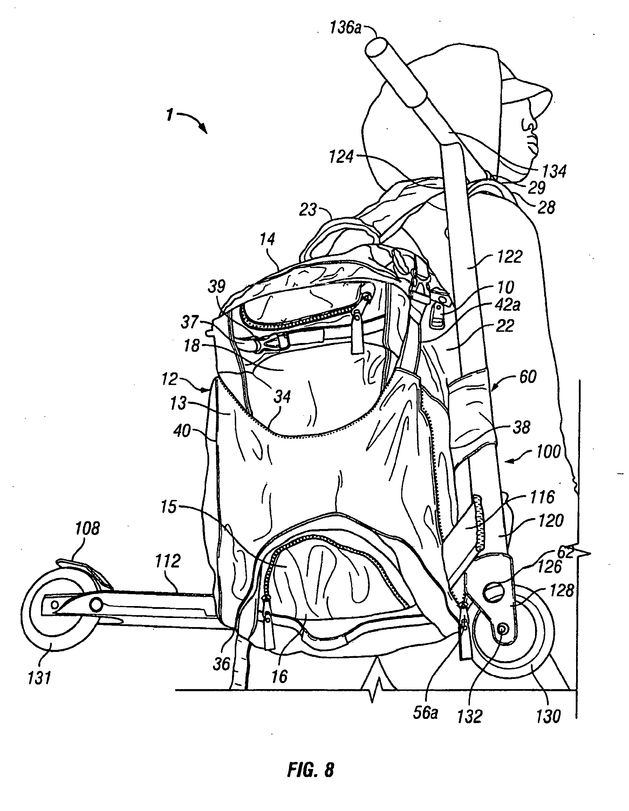

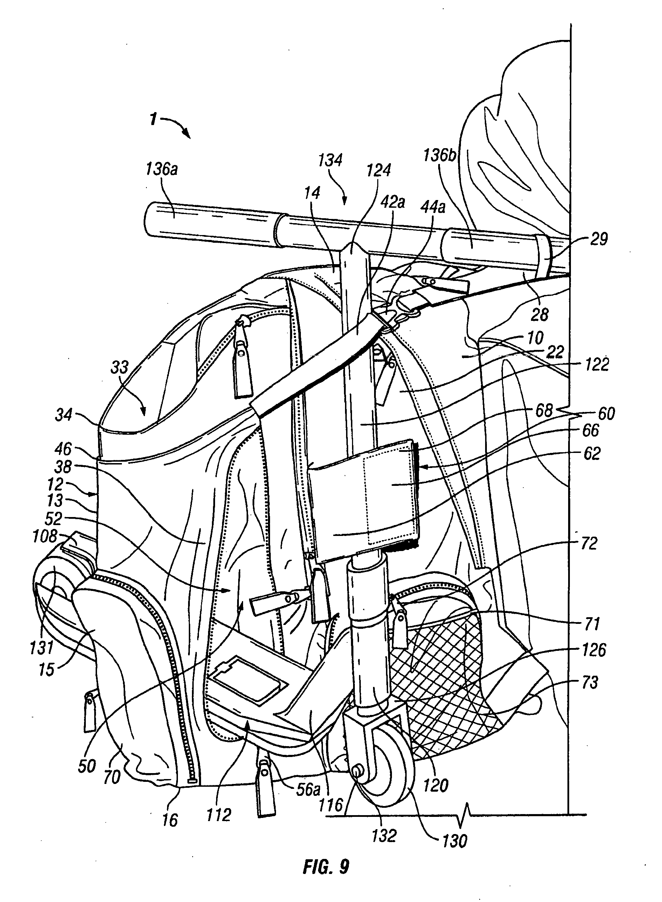

With reference to FIGS. 8 and 9, operation of the backpack apparatus to carry a fully assembled scooter will now be described. First, the user fully unzips the first zipper assembly 56a so the zipper assembly 56a is in the fully open position. This creates a first side opening 52 defined by the first side wall 46 of the holder panel assembly 12 forming the top of the side opening 52, the first side edge 38 of the holder panel 13, and the first side portion 22 of the backpack body 10. Similarly, the user then fully unzips the second zipper assembly 56b so a second side opening 54 is defined by the second side wall 48 of the holder panel assembly 12 forming the top of the second side opening 54, the second side edge 40 of the holder panel 13, and the second side portion 22 of the backpack body 10. Thus, the user has created the two opposing side openings 52, 54 of the scooter storage compartment 50 on opposite sides of the holder panel 13, thereby converting the scooter storage compartment 50 to the open configuration. The user may unfasten buckle 39 of front securing strap 37 to prepare for inserting the scooter 100. The user may also unfasten buckles 44a, 44b of the two strap apparatus 42a, 42b to detach the holder panel 13 from the backpack body 10.

Then the user inserts the scooter 100 into the scooter storage compartment 50 of the backpack apparatus 1 by sliding the scooter deck assembly 110 through the first side opening 52 of the scooter storage compartment 50. More particularly, the user slides the scooter deck assembly 110 in rear end first by inserting the rear wheel 131 first so that the rear wheel 131 and rear end 135 of deck 112 are disposed through the first side opening 52. The user continues to slide the scooter 100 through so the rear wheel 131 and rear end 135 of deck 112 extend through the second side opening 54 of the scooter storage compartment 50. In exemplary embodiments, the user extends front securing strap 37 around the rear end 135 of the scooter 100 and fastens buckle 39 to further secure the rear end 135 of the scooter 100. The user may then fasten the buckles 44a, 44b of the strap apparatus 42a, 42b to attach the holder panel 13 to the backpack body 10 and may tighten the straps as necessary to further secure the scooter 100.

As best seen in FIG. 8, a significant portion of the scooter deck assembly 110 should be disposed within the scooter storage compartment 50 and rest at the bottom of the compartment. The front wheel 130 and front fork 128 will extend out of the first side opening 52

As best seen in FIG. 8, a significant portion of the scooter deck assembly 110 should be disposed within the scooter storage compartment 50 and rest at the bottom of the compartment. The front wheel 130 and front fork 128 will extend out of the first side opening 52 and the steer tube 122 and handlebar assembly 134 will extend upward adjacent the first side portion 22 of the backpack body 10.

At this point, the user can employ the closure device 60 to secure the steer tube 122 of the scooter 100. To do this, the user unfastens the mating portion 66 from the mating piece 68 of the closure device 60 and holds the band 62 open. The user then places the scooter steer tube 122 up against the first side portion 22 of the backpack body 10 adjacent the mating piece 68 of the closure device 60. Next, the user stretches the band 62 around the scooter steer tube 122 and fastens the mating portion 66 to the mating piece 68 to create a tight connection so the scooter steer tube is snugly held by the closure device 60. The user can also use the releasable strap 29 on shoulder strap 28b to secure scooter handlebar 136b to the shoulder strap 28 so the handlebar assembly 134 does not swing around when carried. The user would extend the releasable strap 29 around handlebar 136b and close using the velcro fastening material. Advantageously, the additional connections between the holder panel 13 and the backpack body 10 provided by side walls 46, 48 facilitate a snug fit for the scooter 100. Therefore, the scooter 100 is more securely held and less prone to shift or otherwise move around when being carried in the backpack apparatus 1 by the user.

To unpack the scooter 100 from the backpack apparatus 1, the user unfastens the velcro of the releasable strap 29 on shoulder strap 28b and then unfastens the mating portion 66 from the mating piece 68 of the closure device 60 to open the closure device. The user may then either unfasten the buckles 44a, 44b of the strap apparatus 42a or just loosen one or both strap apparatus 42a, 42b. This creates some space between the holder panel 13 and the backpack body 10 to ease removal of the scooter 100 from the scooter storage compartment 50. Then the scooter 100 can be slid out of the scooter storage compartment 50 by grasping a front portion of the scooter 100 such as the front wheel 130, the front fork 128, the head tube 120, or the bottom portion 126 of the steer tube 122 and pulling the scooter deck assembly 110 in through the second side opening 54 of the scooter storage compartment 50 and then out the first side opening 52.

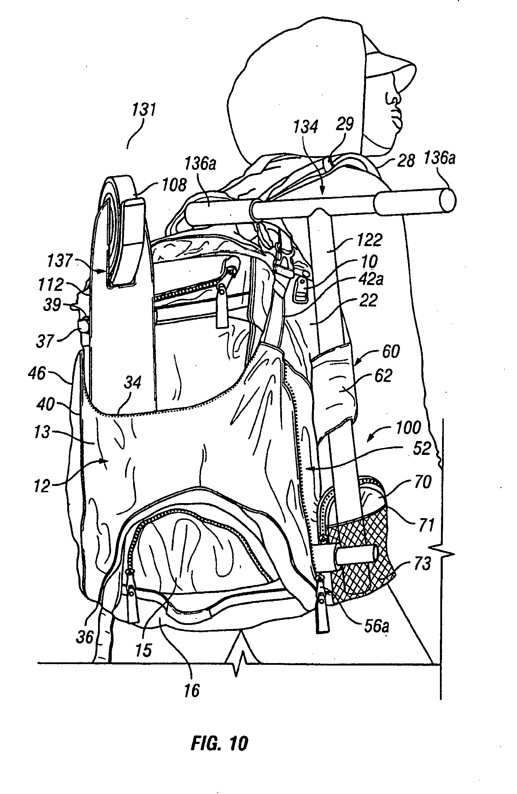

Turning to FIGS. 10-11, operation of the backpack apparatus to carry a partially disassembled scooter will be described. First, the user fully unzips the first zipper assembly 56a so the zipper assembly 56a is in the fully open position. This creates a first side opening 52 defined by the first side wall 46 of the holder panel assembly 12 forming the top of the side opening 52, the first side edge 38 of the holder panel 13, and the first side portion 22 of the backpack body 10. On the other side of the holder panel 13, the user fully zips the second zipper assembly 56b so the second side edge 40 of the holder panel 13 is fastened to the second side portion 22 of the backpack body 10. Thus, the user has created only one side opening 52 for the scooter storage compartment 50 on the first side of the holder panel 13, thereby converting the scooter storage compartment 50 to the partially closed configuration. The user may unfasten buckles 44a, 44b of the two strap apparatus 42a, 42b to detach the holder panel 13 from the backpack body 10. The user may also unfasten buckle 39 of front securing strap 37 to prepare for inserting the scooter 100.

Either previously, or at this time, the user partially disassembles the scooter 100. More particularly, the user separates the steer tube 122 from the deck assembly 110 by removing the bottom portion 126 of the steer tube 122 from the head tube 120. Then the user inserts the deck assembly 110 of the scooter 100 into the scooter storage compartment 50 either through the top space 33 between the top edge 34 of the holder panel 13 and front portion 18 of the backpack body 10 or the through the first side opening 52 of the holder panel assembly 12. If loaded from the top, the user faces the neck 116 and head tube 120 down so those components of the scooter rest at the bottom of the scooter storage compartment 50 and the back 135 of the scooter 100 and the rear wheel 131 and brake 108 stick out of the top space 33. If loaded through the first side opening 52, the user inserts the rear wheel 131 in first and slides the back 135 of the scooter 100 into the scooter storage compartment 50 and upwards through the top opening 33. When the scooter 100 is loaded, a rear portion of the deck assembly 110 may also stick out of the top opening 33, and an inner tube portion of the scooter 100 may stick out of the first side opening 52. The user then fastens buckle 44b of the strap apparatus 42b to secure the holder panel 13 to the backpack body 10 and maintain a tight, snug storage of the scooter deck assembly 110. In exemplary embodiments, the user extends front securing strap 37 around the back 135 of the scooter 100 and fastens buckle 39 to further secure the back 135 of the scooter 100.

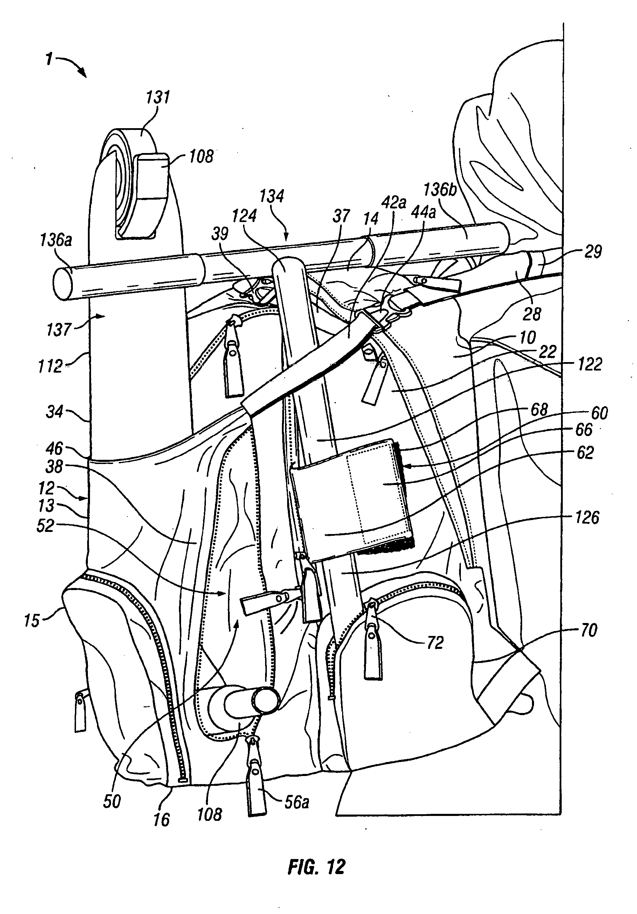

The user then stows the steer tube 122 of the scooter 100 by placing the bottom portion 126 of the steer tube 122 into side pocket 70. In exemplary embodiments, the user slides the bottom portion 126 of the steer tube 122 in between the elastic band 71 of the mesh 73 side pocket 70 and the side 22 of the backpack body 10. The elastic band 71 will hold the bottom portion 126 of the steer tube 122 securely. If the backpack apparatus utilizes a solid flap side pocket 70A, as shown in FIG. 12, the user may zip the zipper 72 of the side pocket 70A up to a point where the zipper 72 is adjacent the steer tube 122 for a more snug fit in the side pocket 70A. To secure the steer tube 122 of the scooter 100 to the backpack apparatus 1, the user unfastens the mating portion 66 from the mating piece 68 of the closure device 60 and holds the band 62 open. The user then places the scooter steer tube 122 up against the first side portion 22 of the backpack body 10 adjacent the mating piece 68 of the closure device 60. Next, the user stretches the band 62 around the scooter steer tube 122 and fastens the mating portion 66 to the mating piece 68 to create a tight connection so the scooter steer tube is snugly held by the closure device 60.

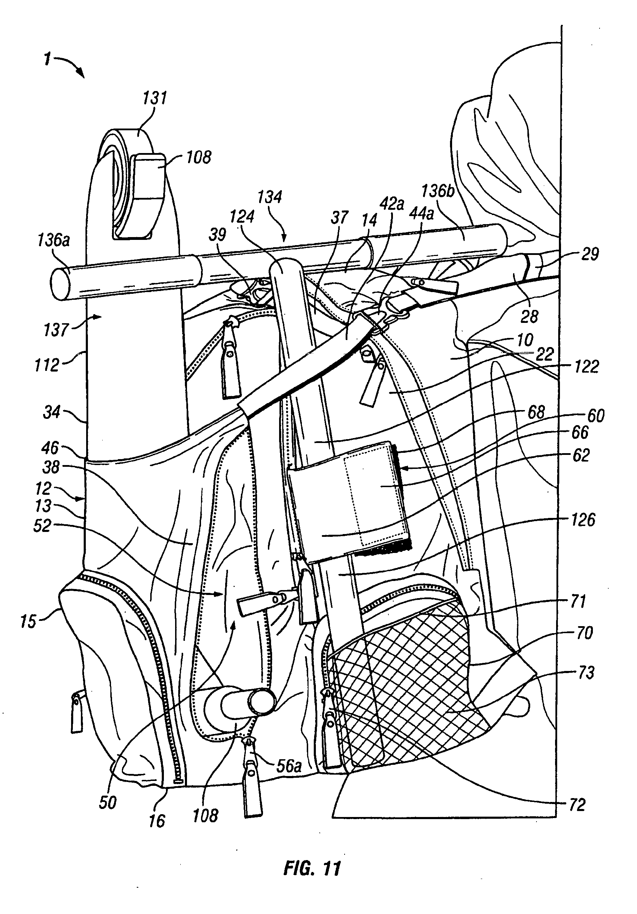

As best seen in FIG. 11, one of the strap apparatus 42a can be used to further secure the steer tube 122 of the scooter 100 by extending the strap apparatus 42 around a top portion 124 of the steer tube 122 and fastening buckle 44a. Advantageously, the additional connection between the holder panel 13 and the backpack body 10 provided by side wall 46 facilitates a snug fit for the scooter deck assembly 110. Therefore, the deck assembly 110 is more securely held and less prone to shift or otherwise move around when being carried in the backpack apparatus 1 by the user. As to the steer tube 122, it is simultaneously held by the strap apparatus 42a at or near a top portion 124 of the steer tube, by the closure device 60 at an intermediate point of the steer tube 122, and the bottom of the steer tube 122 is disposed within and supported by the side pocket 70.

To unpack the partially disassembled scooter 100 from the backpack apparatus 1 in which the scooter storage compartment 50 is in the partially closed configuration, the user may first unfasten buckle 44a to detach strap apparatus 42a from the backpack body 10 or simply loosen strap apparatus 42a. Next, the user unfastens the mating portion 66 from the mating piece 68 of the closure device 60 to open the closure device. The bottom portion 126 of the steer tube 122 may be lifted out of pocket 70. If using solid flap side pocket 70A, the zipper 72 of side pocket 70A may be unzipped and the steer tube 122 removed. Alternatively, the closure device 60 may be loosened and the steer tube 122 slid upwards and removed.

To unpack the scooter deck assembly 110 from the scooter storage compartment 50, the user first unfastens buckle 39 to open front securing strap 37 to release the back 135 of the scooter 100. Next, the user may either unfasten the buckle 44b of the strap apparatus 42b or loosen strap apparatus 42b. This creates some space between the holder panel 13 and the backpack body 10 to ease removal of the deck assembly 110 from the scooter storage compartment 50. Then the deck assembly 110 can be slid out of the scooter storage compartment 50 by grasping the rear wheel 131 or the back end 35 of the deck assembly 110 and pulling the deck assembly upwards and out through the top opening 33 of the holder panel assembly 12. Alternatively, the user could grasp the head tube 120 and pull the scooter deck assembly 110 out through the first side opening 52 of the scooter storage compartment 50.

Once the scooter 100 is removed from the backpack apparatus, both zipper assemblies 56a, 56b can be fully zipped up to close the side openings 52, 54 and fully attach the holder panel assembly 12 to the backpack body 10. This streamlines the backpack apparatus 1 and lends it a more attractive appearance than if the holder panel 13 were left hanging loose. As seen in FIG. 12, the user can securely hang the backpack apparatus 1 on the scooter 100 so the user does not need to carry the backpack apparatus 1 while riding. More particularly, shoulder straps 28a, 28b are placed on handle bars 36a, 36b with one shoulder strap over each handle bar. Webbing strap 20 may be tightened and buckle 32 fastened to shorten the length of the strap 20 and create a more secure connection.

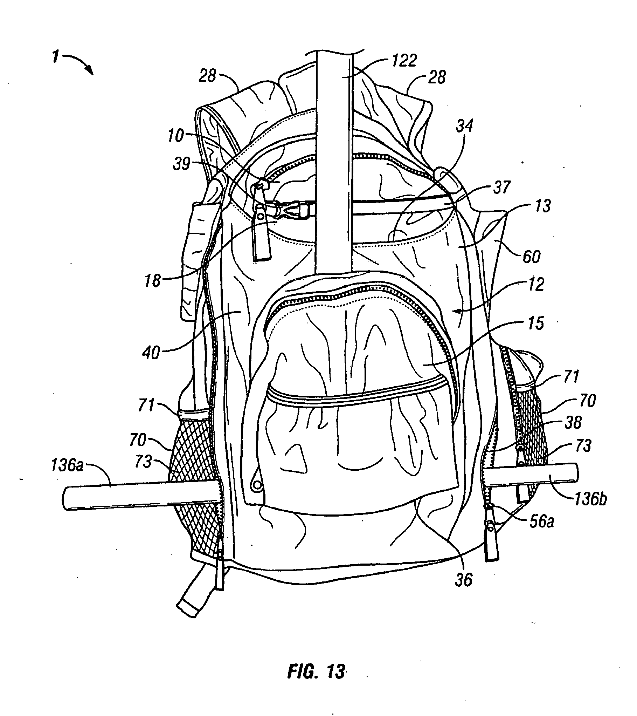

It should be noted that a variety of storage options are available for stowing a scooter 100 or components thereof in backpack apparatus I. By way of example, another approach is to carry the steer tube 122 and handlebar assembly 134 in the scooter storage compartment 50, as shown in FIG. 13. An embodiment of a backpack apparatus 1 for this storage option would have a first zipper assembly 56a and a second zipper assembly 56b on opposite sides of the holder panel 13 such that the zipper assemblies 56a, 56b close from the top of the first and second side edges 38, 40 of the holder panel 13 to the bottom.

To stow the scooter steer tube 122 and handlebar assembly 134, the user first separates the steer tube 122 from the deck assembly 110 by removing the bottom portion 126 of the steer tube 122 from the head tube 120. The user then fully unzips zipper assemblies 56a and 56b so they are positioned at the top of the first and second side edges 38, 40 of the holder panel 13. Then the user inserts the steer tube 122 and handlebar assembly 134 of the scooter 100 into the scooter storage compartment 50 either through the top space 33 between the top edge 34 of the holder panel 13 and front portion 18 of the backpack body 10 or through the first or second side opening 52, 54 of the holder panel assembly 12. If loaded from the top, the user faces the handlebar assembly 134 down and may insert at an angle with one of handlebars 136a, 136b first in order to fit the handlebar assembly 134 in the scooter storage compartment 50. The handlebar assembly 134 and steer tube 122 is then lowered down so the handlebar assembly 134 rests at the bottom of the scooter storage compartment 50, the bottom portion 126 of the steer tube 122 sticks out of the top space 33, and one of handlebars 136a, 136b sticks out of the first side opening 52 of the holder panel assembly 12 and the other of handlebars 136a, 136b sticks out of the second side opening 54 of the holder panel assembly 12.

If loaded through the first side opening 52, the user inserts the bottom portion 126 of the steer tube 122 in first, turns it upward and then slides one of handlebars 136a, 136b into the scooter storage compartment 50 so the bottom portion 126 of the steer tube 122 extends upward through the top opening 33, one of handlebars 136a, 136b sticks out of the side opening 52 of the holder panel assembly 12 and the other of handlebars 136a, 136b sticks out of the second side opening 54 of the holder panel assembly 12. The user then zips zipper assemblies 56a and 56b so they are positioned near the bottom of the first and second side edges 38, 40 of the holder panel 13 adjacent to and securing the handlebars 136a, 136b. The user may also fasten buckle 44b of the strap apparatus 42b to secure the holder panel 13 to the backpack body 10 and maintain a tight, snug storage of the scooter steer tube 122 and handlebar assembly 134. To unload the scooter steer tube 122 and handlebar assembly 134, the user unzips zipper assemblies 56a and 56b and removes the steer tube 122 and handlebar assembly 134 by grasping either the steer tube 122 or one of the handlebars 136a, 136 and pulling the steer tube 122 and handlebar assembly 134 out through the top opening 33 of the holder panel assembly 12 or through one of the side openings 52, 54 of the holder panel assembly 12.

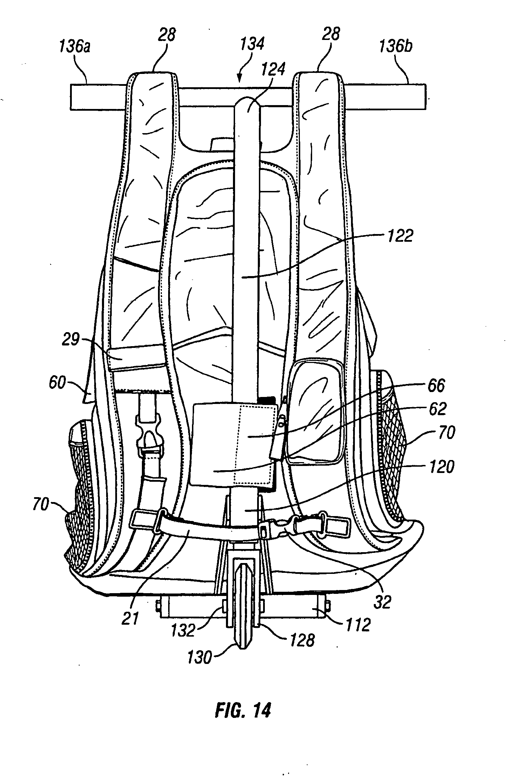

As shown in FIG. 2, a second closure device 60A may be provided on the back portion 20 of the backpack body 10. Thus, the backpack apparatus 1 can be secured to the scooter 100 by using closure device 60A to wrap around the scooter steer tube 122, as shown in FIG. 14. To do this, the user unfastens the mating portion 66 from the mating piece 68 of the closure device 60A and holds the band 62 open. The user then stretches the band 62 around the scooter steer tube 122 and fastens the mating portion 66 to the mating piece 68 to create a tight connection so the closure device 60A snugly holds the steer tube 122. Advantageously, this additional connection between the closure device 60A and the scooter steer tube 122 provides a more secure attachment of the backpack apparatus 1 to the scooter 100. Therefore, the backpack apparatus 1 is more securely held and less prone to shift or otherwise move around while the user is riding the scooter 100. To detach the backpack apparatus 1 from the scooter 100, the user unfastens the mating portion 66 from the mating piece 68 of the closure device 60A, holds the band 62 open, and grasps the backpack apparatus 1. Webbing strap 20 is loosened and/or buckle 32 is unfastened. The user then takes the shoulder straps 28a, 28b off of the handle bars 36a, 36b and removes the backpack apparatus 1 from the scooter 100.

Thus, it is seen that scooter cases and backpack apparatus are provided. It should be understood that any of the foregoing configurations and specialized components or may be interchangeably used with any of the apparatus or systems of the preceding embodiments. Although illustrative embodiments are described hereinabove, it will be evident to one skilled in the art that various changes and modifications may be made therein without departing from the scope of the disclosure.

## Claims

1. A backpack apparatus (1) comprising:
a backpack body (10) having a top portion (14), a bottom portion (16), a front portion (18), a back portion (20), a first side portion (22), and a second side portion (24) and defining a main storage compartment (26);
a holder panel assembly (12) having:
a holder panel (13) including a top edge (34), a bottom edge (36), a first side edge (38), and a second side edge (40), the holder panel assembly (12) including at least one zipper assembly (56a, 56b), a first side wall (46) extending from a portion of the first side edge (38) of the holder panel (13), and a second side wall (48) extending from a portion of the second side edge (40) of the holder panel (13);
the bottom edge (36) of the holder panel assembly (12) being fixedly attached to the backpack body (10);
the top edge (34) of the holder panel (13) being unattached to the backpack body (10);
the first side wall (46) of the holder panel assembly (12) being fixedly attached to the backpack body (10);
the second side wall (48) of the holder panel assembly (12) being fixedly attached to the backpack body(10);
**characterized in that**
the holder panel assembly (12) defines a scooter storage compartment (50), the scooter storage compartment (50) defining a first side opening (52) defined by the first side edge (38) of the holder panel (13), the first side wall (46) of the holder panel assembly (12), and the first side portion (22) of the backpack body (10),
the scooter storage compartment (50) further defines a second side opening (54) defined by the second side edge (40) of the holder panel (13), the second side wall (48) of the holder panel assembly (12), and the second side portion (24) of the backpack body (10),
the at least one zipper assembly (56a, 56b) comprises a first zipper assembly (56a) running along the first side edge (38) of the holder panel (13) and a second zipper assembly (56b) running along the second side edge (40) of the holder panel (13), and
a closure device (60) is attached to the first side portion (22) of the backpack body (10) to hold and secure a steer tube of a scooter.

2. The backpack apparatus (1) of claim 1 further comprising a side pocket (70) on the frist side portion (22) of the backpack body (10), the side pocket (70) located below the closure device (60).

3. The backpack apparatus (1) of claim 1 wherein the closure device (60) comprises a band 862) and a fastener (66).

4. The backpack apparatus (1) of claim 1 further comprising at least one strap apparatus (42a, 42b) fixedly attached to the holder panel assembly (12) and releasably attachable to the backpack body (10).

## Patentansprüche

1. Rucksackvorrichtung (1), umfassend:
einen Rucksackkörper (10), der einen oberen Abschnitt (14), einen unteren Abschnitt (16), einen vorderen Abschnitt (18), einen hinteren Abschnitt (20), einen ersten Seitenabschnitt (22) und einen zweiten Seitenabschnitt (24) aufweist und ein Hauptaufbewahrungsfach (26) definiert;
eine Halterbahnbaugruppe (12), aufweisend:
eine Halterbahn (13), die eine Oberkante (34), eine Unterkante (36), eine erste Seitenkante (38) und eine zweite Seitenkante (40) enthält, wobei die Halterbahnbaugruppe (12) zumindest eine Reißverschlussbaugruppe (56a, 56b), eine erste Seitenwand (46), die von einem Abschnitt der ersten Seitenkante (38) der Halterbahn (13) verläuft, und eine zweite Seitenwand (48) enthält, die von einem Abschnitt der zweiten Seitenkante (40) der Halterbahn (13) verläuft;
wobei die Unterkante (36) der Halterbahnbaugruppe (12) starr am Rucksackkörper (10) angebracht ist;
wobei die Oberkante (34) der Halterbahn (13) nicht am Rucksackkörper (10) angebracht ist;
wobei die erste Seitenwand (46) der Halterbahnbaugruppe (12) starr am Rucksackkörper (10) angebracht ist;
wobei die zweite Seitenwand (48) der Halterbahnbaugruppe (12) starr am Rucksackkörper (10) angebracht ist;
**dadurch gekennzeichnet, dass**
die Halterbahnbaugruppe (12) ein Rolleraufbewahrungsfach (50) definiert, wobei das Rolleraufbewahrungsfach (50) eine erste Seitenöffnung (52) definiert, welche durch die erste Seitenkante (38) der Halterbahn (13), die erste Seitenwand (46) der Halterbahnbaugruppe (12) und den ersten Seitenabschnitt (22) des Rucksackkörpers (10) definiert ist,
wobei das Rolleraufbewahrungsfach (50) ferner eine zweite Seitenöffnung (54) definiert, welche durch die zweite Seitenkante (40) der Halterbahn (13), die zweite Seitenwand (48) der Halterbahnbaugruppe (12) und den zweiten Seitenabschnitt (24) des Rucksackkörpers (10) definiert ist,
wobei die zumindest eine Reißverschlussbaugruppe (56a, 56b) eine erste Reißverschlussbaugruppe (56a), die entlang der ersten Seitenkante (38) der Halterbahn (13) verläuft, und eine zweite Reißverschlussbaugruppe (56b) umfasst, die entlang der zweiten Seitenkante (40) der Halterbahn (13) verläuft, und
eine Verschlussvorrichtung (60) am ersten Seitenabschnitt (22) des Rucksackkörpers (10) angebracht ist, um ein Lenkrohr eines Rollers zu halten und zu befestigen.

2. Rucksackvorrichtung (1) nach Anspruch 1, ferner umfassend eine Seitentasche (70) auf dem ersten Seitenabschnitt (22) des Rucksackkörpers (10), wobei sich die Seitentasche (70) unterhalb der Verschlussvorrichtung (60) befindet.

3. Rucksackvorrichtung (1) nach Anspruch 1, wobei die Verschlussvorrichtung (60) ein Band ((62) und ein Befestigungselement (66) umfasst.

4. Rucksackvorrichtung (1) nach Anspruch 1, ferner umfassend zumindest eine Riemenvorrichtung (42a, 42b), die starr an der Halterbahnbaugruppe (12) angebracht ist und lösbar am Rucksackkörper (10) anbringbar ist.

## Revendications

1. Sac à dos (1) comprenant :
un corps de sac à dos (10) ayant une portion supérieure (14), une portion inférieure (16), une portion antérieure (18), une portion postérieure (20), une première portion latérale (22) et une seconde portion latérale (24) et définissant un compartiment de stockage principal (26) ;
un assemblage formant panneau de maintien (12) ayant :
un panneau de maintien (13) incluant un bord supérieur (34), un bord inférieur (36), un premier bord latéral (38) et un second bord latéral (40), l'assemblage formant panneau de maintien (12) incluant au moins un assemblage formant fermeture à glissière (56a, 56b), une première paroi latérale (46) s'étendant depuis une portion du premier bord latéral (38) du panneau de maintien (13) et une seconde paroi latérale (48) s'étendant depuis une portion du second bord latéral (40) du panneau de maintien (13) ;
le bord inférieur (36) de l'assemblage formant panneau de maintien (12) étant attaché de manière fixe sur le corps de sac à dos (10) ;
le bord supérieur (34) du panneau de maintien (13) n'étant pas attaché au corps de sac à dos (10) ;
la première paroi latérale (46) de l'assemblage formant panneau de maintien (12) étant attachée de manière fixe sur le corps de sac à dos (10) ;
la seconde paroi latérale (48) de l'assemblage formant panneau de maintien (12) étant attachée de manière fixe sur le corps de sac à dos (10) ;
**caractérisé en ce que**
l'assemblage formant panneau de maintien (12) définit un compartiment de stockage pour trottinette (50), le compartiment de stockage pour trottinette (50) définissant une première ouverture latérale (52) définie par le premier bord latéral (38) du panneau de maintien (13), par la première paroi latérale (46) de l'assemblage formant panneau de maintien (12), et par la première portion latérale (22) du corps de sac à dos (10),
le compartiment de stockage pour trottinette (50) définit en outre une seconde ouverture latérale (54) définie par le second bord latéral (40) du panneau de maintien (13), par la seconde paroi latérale (48) de l'assemblage formant panneau de maintien (12), et par la seconde portion latérale (24) du corps de sac à dos (10),
ledit au moins un assemblage formant fermeture à glissière (56a, 56b) comprend un premier assemblage formant fermeture à glissière (56a) courant le long du premier bord latéral (38) du panneau de maintien (13) et un second assemblage formant fermeture à glissière (56b) courant le long du second bord latéral (40) du panneau de maintien (13), et
un dispositif de fermeture (60) est attaché à la première portion latérale (22) du corps de sac à dos (10) pour tenir et pour fixer un tube de direction d'une trottinette.

2. Sac à dos (1) selon la revendication 1, comprenant en outre une poche latérale (70) sur la première portion latérale (22) du corps de sac à dos (10), la poche latérale (70) étant située au-dessous du dispositif de fermeture (60).

3. Sac à dos (1) selon la revendication 1, dans lequel le dispositif de fermeture (60) comprend une bande (62) et un élément de fixation (66).

4. Sac à dos (1) selon la revendication 1, comprenant en outre au moins un dispositif à sangle (42a, 42b) attaché de manière fixe à l'assemblage formant panneau de maintien (12) et capable d'être attaché de façon libérable sur le corps de sac à dos (10).
